# EUROPEAN PATENT SPECIFICATION

(11) **EP 1 779 908 B1**
(45) Date of publication and mention of the grant of the patent: **07.10.2009**
(21) Application number: 05767176.0
(22) Date of filing: 29.07.2005
(51) Int. Cl.: A63F 13/10

(54) **GAME MACHINE, GAME MACHINE CONTROL METHOD, AND INFORMATION STORAGE MEDIUM**
SPIELAUTOMAT, SPIELAUTOMATENSTEUERUNGSVERFAHREN UND INFORMATIONSSPEICHERMEDIUM
MACHINE DE JEU, METHODE DE CONTROLE DE LA MACHINE DE JEU ET SUPPORT DE STOCKAGE DES INFORMATIONS

(30) Priority: 09.08.2004 JP 2004231933
(43) Date of publication of application: 02.05.2007
(73) Proprietor: Konami Digital Entertainment Co., Ltd., Tokyo 107-8324 (JP)
(72) Inventor: TERADA, Toshiyuki, Minato-ku, Tokyo 107-8324 (JP); ITO, Hiromichi, Minato-ku, Tokyo 107-8324 (JP)
(74) Representative: Winter, Brandl, Fürniss, Hübner Röss, Kaiser, Polte Partnerschaft Patent- und Rechtsanwaltskanzlei
(86) International application number: PCT/JP2005/013927
(87) International publication number: WO 2006/016488

(56) References cited:
- EP-A- 1 052 588
- JP-A- 2002 346 205
- JP-A- 2004 171 523
- US-A1- 2002 183 116

## Description

### TECHNICAL FIELD

The present invention relates to a game machine, a game machine control method, and an information storage medium.

### BACKGROUND ART

There is known a game machine for carrying out a game involving a plurality of players or groups of players. For example, there is known a game machine for carrying out a match game in which a plurality of players or groups of players play a match against each other. Conventionally, such a game machine is utilized such that, after a game is played by a pair of players or player groups, another game is played by another pair of players or player groups, which is determined based on the result of the previous game. For example, a match game tournament takes place using the above-described game machine.

Document EP 1 052 588 A2 describes a ranking service system for on-line games and a method therefor for indicating records of gamers who enjoy online-games. The ranking service system registers a user as a member based on a membership entry request from the user, registers competition start requests of plural users to user databases, respectively, based on user data inputted from registered users as members, registers users' competition results to the user databases, respectively, based on competition result data from the plural users, and controls users' rankings based on the result.

Document US 2002/0183116 A1 describes a server device for net games which can decide a winner out of a large number of users in a short time without wasting the time of the users. A lobby server detects the winners of the normal pennant who are accessing using client computers, and sequentially decides the pairing in the games for the winners of the normal pennant who won the games which were played according to the decided pairing in the games.

### DISCLOSURE OF THE INVENTION

### Problems to be Solved by the Invention

In order to conduct the above-described match game, it is desirable that, while ensuring that a game is carried out by the pair of players or player groups determined based on the previous game result, the players are given freedom in terms of at what time to play the game, or the like.

The present invention has been conceived in view of the above, and an object of the present invention is to provide a game machine, a game machine control method, and an information storage medium, all capable of giving the players freedom in terms of at what time to play the game, or the like, while ensuring that a game is carried out by the pair of players or player groups determined based on the previous game result.

### Means for Solving the Problems

The object is solved by the features of the independent claims. The dependent claims are directed to preferred embodiments of the invention.

In order to solve the above described problems, according to the present invention, there is provided a game machine for implementing a game involving a plurality of players or groups of players, comprising game result data reading means for reading game result data stored in each of information storage media respectively corresponding to the plurality of players or groups of players, judgment means for determining whether or not a combination of the game result data read by the game result data reading means is a predetermined combination, game implementation control means for implementing the game according to a result of the determination made by the judgment means, and game result data update means for updating, for at least one of the information storage media respectively corresponding to the plurality of players or groups of players, the game result data stored in the information storage medium, based on a result of the game.

According to another aspect of the present invention, there is provided a control method for controlling a game machine for implementing a game involving a plurality of players or groups of players, comprising a game result data reading step of reading game result data stored in each of information storage media respectively corresponding to the plurality of players or groups of players, a judgment step of determining whether or not a combination of the game result data read at the game result data reading step is a predetermined combination, a game implementation control step of implementing the game according to a result of the determination made at the judgment step, and a game result data update step of updating, for at least one of the information storage media respectively corresponding to the plurality of players or groups of players, the game result data stored in the information storage medium, based on a result of the game.

According to yet another aspect of the present invention, there is provided an information storage medium recording a program for causing a computer, such as a consumer game machine, a portable game machine, a commercial game machine, a portable telephone, a PDA (personal data assistant), a personal computer, or the like, to function as a game machine for implementing a game involving a plurality of players or groups of players, comprising game result data reading means for reading game result data stored in each of information storage media respectively corresponding to the plurality of players or groups of players, judgment means for determining whether or not a combination of the game result data read by the game result data reading means is a predetermined combination, game implementation control means for implementing the game according to a result of the determination made by the judgment means, and game result data update means for updating, for at least one of the information storage media respectively corresponding to the plurality of players or groups of players, the game result data stored in the information storage medium, based on a result of the game.

The information storage medium according to the present invention may be an information storage medium storing the above-described program.

The present invention relates to a game machine for implementing a game involving a plurality of players or groups of players. Here, "a group of players (a player group)" as is referred to here is constituted of a plurality of players. Also, "a plurality of players or groups of players (player groups)" as is referred to here refers to "a plurality of players", "a plurality of groups of players", or "one or more players and one or more groups of players".

According to the present invention, game result data stored in each of the information storage media respectively corresponding to a plurality of players or groups of players is read, and whether or not the combination thereof is a predetermined combination is determined. Then, the above-described game is implemented according to the result of the determination.

When a game is implemented, for at least one of the information storage media respectively corresponding to the plurality of players or groups of players, the game result data stored in that information storage medium is updated based on the result of the game.

According to the present invention, it is possible, while ensuring that a game is carried out by the pair of players or player groups determined based on the result of the previous game, to impart freedom to the players in terms of, for example, a time at which to play the game.

In the above, the game machine may further comprise combination data storage means for storing combination data indicative of a plurality of combinations of the game result data, wherein the judgment means may determine whether or not the combination of the game result data read by the game result data reading means coincides with any of the plurality of combinations indicated by the combination data.

This arrangement makes it possible to preferably determine whether or not the combination of the game result data each read from the information storage medium corresponding to each of the players or groups of players is a predetermined combination.

Also, in the above, the game may be a match game to be played by a plurality of players or groups of players, and the game result data update means may update the game result data stored in the information storage medium corresponding to a winning player or a winning group of players of the match game.

This arrangement makes it possible, while ensuring that a match game is implemented by the pair of players or groups of players determined based on the result of the previous match game, to impart freedom to the players in terms of, for example, the time when to play the match game.

### BRIEF DESCRIPTION OF DRAWINGS

Fig. 1 is a diagram showing a structure of a game machine according to an embodiment of the present invention;
Fig. 2 is a diagram showing a structure of a game system according to the embodiment of the present invention;
Fig. 3 is a functional block diagram of the game system according to the embodiment of the present invention;
Fig. 4 is a diagram showing one example of a meeting setting screen;
Fig. 5 is a diagram showing one example of a participant registration screen;
Fig. 6 is a diagram showing one example of a tournament tree;
Fig. 7 is a diagram showing one example of a tournament table;
Fig. 8 is a diagram showing one example of a participant management table;
Fig. 9 is a diagram showing one example of participant data; and
Fig. 10 is a diagram showing an overall structure of a program distribution system according to another embodiment of the present invention.

### BEST MODE FOR CARRYING OUT THE INVENTION

In the following, one example of a preferred embodiment of the present invention will be described in detail based on the accompanying drawings.

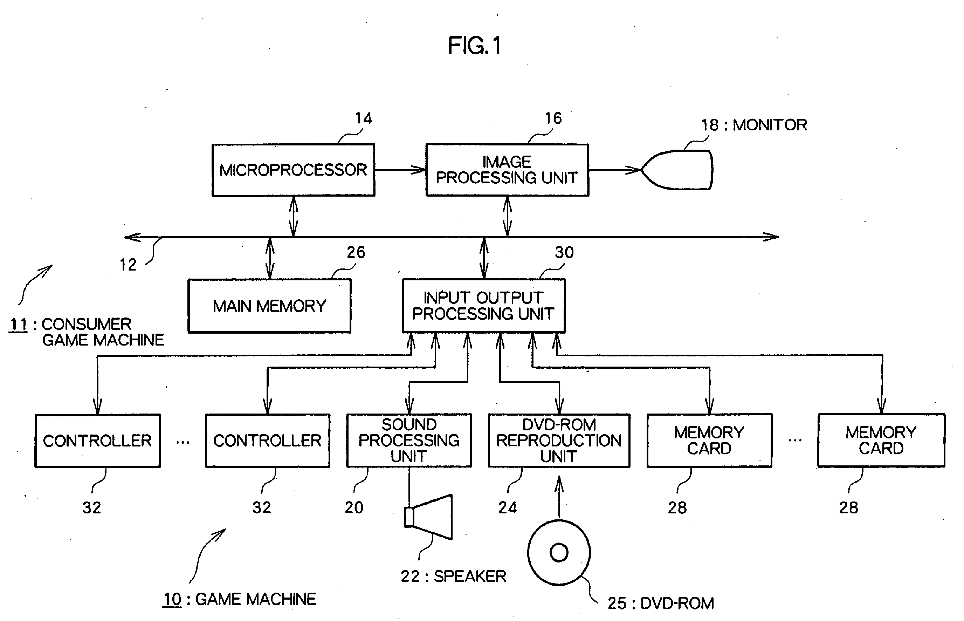

Fig. 1 is a diagram showing a structure of a game machine 10 according to this embodiment. As shown in Fig. 1, the game machine 10 is constructed from a consumer game machine 11 having a DVD-ROM 25, a memory card 28, both serving as information storage media, a monitor 18, and a speaker 22, all mounted or connected thereto. For example, the monitor 18 may be a home-use television set receiver; the speaker 22 may be a built-in speaker thereof.

It should be noted that although a DVD-ROM 25 is used here to supply a program to the consumer game machine 11, any other information storage medium, such as a CD-ROM, a ROM card, or the like, may be used. Alternatively, a program may be supplied from a distant place via a data communication network such as the Internet or the like to the consumer game machine 11.

The consumer game machine 11 is a publicly known computer game system constructed comprising a microprocessor 14, an image processing unit 16, a sound processing unit 20, a main memory 26, a DVD-ROM reproduction unit 24, an input output processing unit 30, and a controller 32. The microprocessor 14, the image processing unit 16, the main memory 26, and the input output processing unit 30 are connected via a bus 12 for mutual data communication. The sound processing unit 20, the DVD-ROM reproduction unit 24, the memory card 28, and the controller 32 are connected to the input output processing unit 30. The respective structural elements other than the controller 32 of the consumer game machine 11 are accommodated in an enclosure.

The bus 12 is used for exchanging an address and/or data among the respective sections of the consumer game machine 11. The microprocessor 14 effects control of the respective sections of the consumer game machine 11 based on an operation system stored in the ROM (not shown), a program read from the DVD-ROM 25, and data read from the memory card 28, and provides the player with a game. The image processing unit 16, which is constructed from a VRAM, receives image data sent from the microprocessor 14, renders a game screen image into the VRAM based on the received image data, converts the content of the received image data into a video signal, and outputs the video signal to the monitor 18 at a predetermined timing. The main memory 26 is constructed from a RAM, for example, to which a program read from the DVD-ROM 25 or data read from the memory card 28 is written as required. The main memory 26 may also be used as a working memory of the microprocessor 14.

The input output processing unit 30 is an interface via which the microprocessor 14 accesses the sound processing unit 20, the DVD-ROM reproduction unit 24, the memory card 28, and the controller 32. The sound processing unit 20 is constructed from a sound buffer, and reproduces and outputs, via the speaker 22, various sound data, such as game music, game sound effects, messages, and so forth, which is read from the DVD-ROM 25 and stored in the sound buffer. The DVD-ROM reproduction unit 24 reads a program stored in the DVD-ROM 25 according to an instruction sent from the microprocessor 14. The controller 32 serves as a general purpose operation input means via which the player inputs various game operations.

The input output processing unit 30 scans the states of the respective sections of the controller 32 every fixed time (for example, every 1/60 second), and sends an operational signal indicative of the scanning result to the microprocessor 14 via the bus 12. The microprocessor 14 determines the game operation carried out by the player, based on the operational signal. The consumer game machine 11 is adapted to connection to a plurality of controllers 32, so that the microprocessor 14 effects control of a game based on the operational signals input from the respective controllers. The memory card 28 comprises a nonvolatile memory (for example, EEPROM, or the like). The consumer game machine 11 has a plurality of memory card slots defined therein for each accepting a memory card 28, so that a plurality of memory cards 28 can be inserted into the consumer game machine 11 at the same time. The memory card 28 can be removed from the memory card slot. The memory card 28 stores various game data relevant to a game.

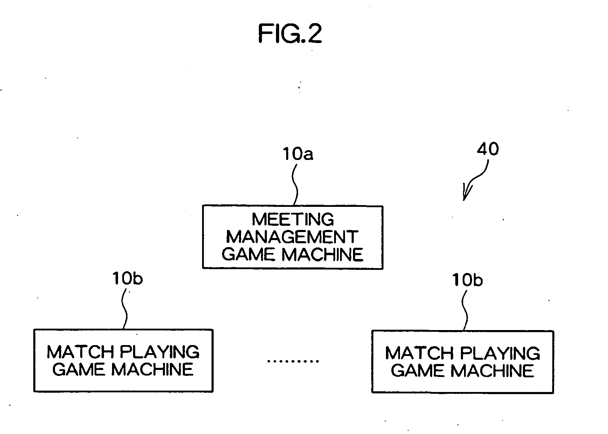

The game machine 10 having the above-described structure provides a soccer game in which a player plays a game by operating a soccer player character of a team to be operated (an operation object team) . This soccer game has a meeting holding mode in which a game meeting in which a plurality of players can participate can be held. In the meeting holding mode, one game machine 10 is used to manage the meeting, and a plurality of game machines are used for carrying out matches. That is, a game system 40, such as is shown in Fig. 2, including a meeting management game machine 10a and a plurality of match playing game machines 10b, makes it possible to preferably hold a soccer game meeting.

In the following, the meeting holding mode will be described while referring to a case as an example in which a soccer game meeting takes place in which a player participates as an individual player. That is, a case in which a soccer game meeting in which a single player operates a single operation object team takes place is described. However, it should be noted that a plurality of players can operate a single operation object team in a soccer game carried out using the game machine 10. Therefore, in the meeting holding mode, it is possible to hold a soccer game meeting in which players participate together as a group of players (a group comprising one or more players), in a manner similar to that for a meeting for individual participation. That is, it is possible to hold a soccer game meeting in which a single operation object team is operated by either one or a plurality of players.

Here, the functional blocks of the game system 40 (the meeting management game machine 10a and the match playing game machine 10b) will be described.

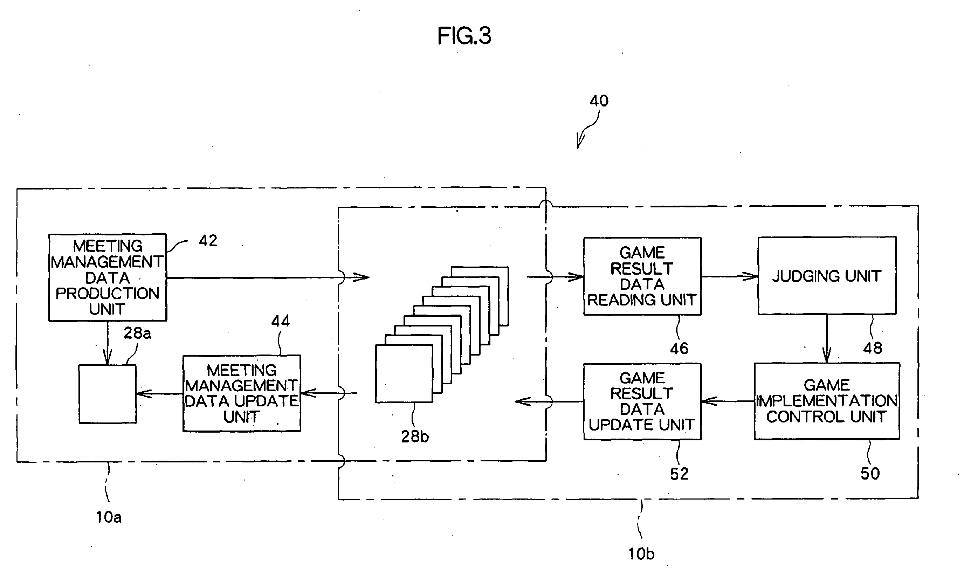

Fig. 3 is a diagram showing the functional blocks mainly relevant to the present invention among those realized by the game system 40. As shown in Fig. 3, the game system 40 is constructed comprising a meeting management data production unit 42, a meeting management data update unit 44, a game result data reading unit 46, a judging unit 48, a game implementation control unit 50, a game result data update unit 52, a meeting management memory card 28a, and a plurality of participant memory cards 28b. The meeting management data production unit 42 and the meeting management data update unit 44 are realized by the meeting management game machine 10a; the game result data reading unit 46, the judging unit 48, the game implementation control unit 50, and the game result data update unit 52 are realized by the match playing game machine 10b.

The meeting management memory card 28a and the participant memory card 28b are each formed using a memory card 28 (an information storage medium). The meeting management memory card 28a is mounted in the meeting management game machine 10a. The participant memory card 28b is mounted, as required, in the meeting management game machine l0a or the match playing game machine 10b. The other functions are formed mainly using a microprocessor 14, and realized by the microprocessor 14 executing a program (supplied to the computer via a computer readable information storage medium, such as a DVD-ROM, or the like, or via a communication network) .

Initially, the functional blocks of the meeting management game machine 10a will be described. The meeting management game machine 10a is used by the host of a meeting to prepare for and manage the meeting, and has a structure necessary to attain that purpose.

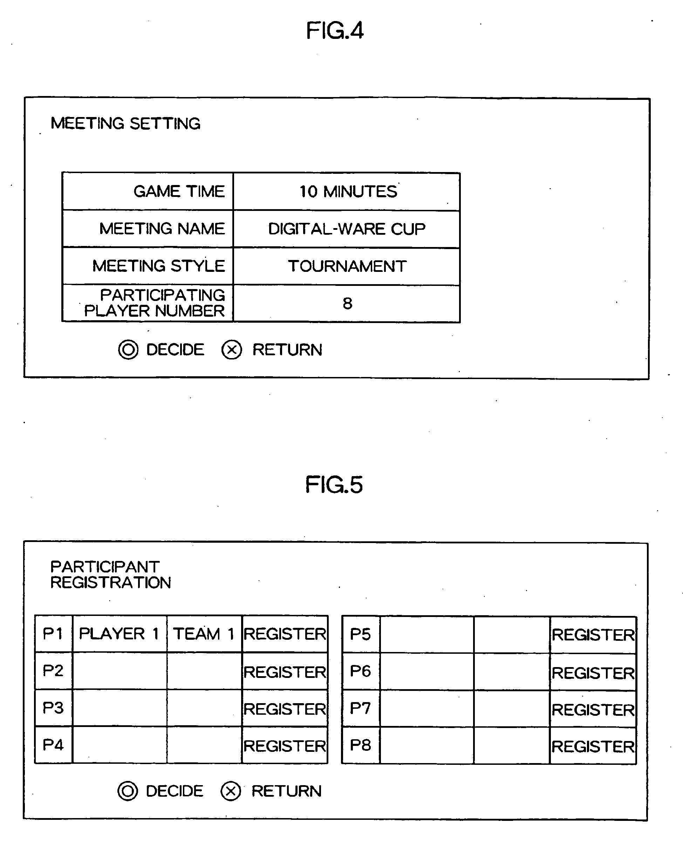

The meeting management data production unit 42 produces meeting management data. The meeting management data is formed containing meeting data, attribute data of players participating in a meeting, and team data, all to be described later. The meeting management data production unit 42 displays a game screen, such as is shown in Figs. 4 and 5, for example, on the monitor 18 in order to produce meeting management data.

Fig. 4 is a diagram showing one example of a meeting setting screen. The screen is used by the host of a meeting to input information concerning the meeting. As shown in Fig. 4, the meeting setting screen image has columns defined therein into which information, for example, on a game time, a meeting name, a meeting style, the number of participant players (in the case of a meeting for group participation, the number of participating player groups), and so forth are input. As a meeting style, for example, a tournament style, a league style, a group league style combining league and tournament, and so forth, are available for selection.

In the following, an exemplary case in which a tournament meeting in which players play a match against each other according to a tournament tree takes place will be described.

Specifically, the host of the meeting inputs the information, and thereafter presses a predetermined decision button of the controller 32. With the decision button pressed, a meeting ID for identifying the meeting is produced. Thereafter, meeting data containing data indicative of the meeting ID and data indicative of the content input on the meeting setting screen shown is produced.

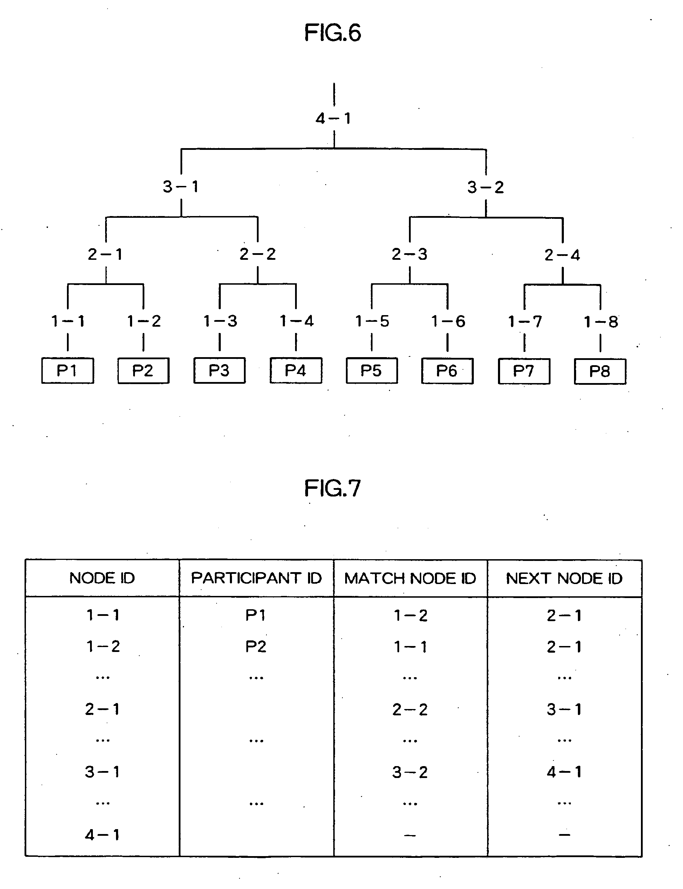

The meeting data contains data indicative of a tournament tree in addition to the above-described data. For example, meeting data to be produced when the number of participant players is set as eight on the meeting setting screen will contain the data indicative of the tournament tree such as is shown in Fig. 6. More specifically, the meeting data contains, for example, a tournament table such as is shown in Fig. 7.

The tournament table shown in Fig. 7 is formed containing a node ID column, a participant ID column, a match node ID column, and a next node ID column.

In the node ID column, a node ID for identifying a node (position) within the tournament tree is stored. In the example shown in Fig. 7, the node ID comprises identification information for identifying a level group (that is, identification information for identifying the number of wins in the tournament) in the tournament tree, and information serving as an index in each level group (in other words, information for identifying a match position in each level group). In the participant ID column, the participant ID of the player corresponding to the concerned node is stored. Note that the participant ID is identification information for identifying a player participating in the meeting (in the case of a meeting for group participation, a player group). In the match node ID column, the node ID of a node corresponding to the opponent player in the match game of the player corresponding to the concerned node is stored. The next node ID column contains the node ID of a node to which the player corresponding to the concerned node is to be next set corresponding to when the player wins the match game.

As shown in Fig. 7, for each of the nodes shown in the tournament tree, the tournament table shows a match node ID corresponding thereto. In this manner, the tournament table also serves as match pairing data which describes all match pairings defined in the tournament tree.

In this embodiment, tournament tables corresponding to the numbers which can be input as the number of participating players on the meeting setting screen are stored in advance in the DVD-ROM 25. That is, a plurality kinds of tournament table are stored in advance in the DVD-ROM 25. The meeting management data production unit 42 selects any tournament table from among the plurality kinds of tournament table stored in the DVD-ROM 25 based on the number of participant players input on the meeting setting screen, and adds the read tournament table in the meeting data. Alternatively, the tournament table may be automatically produced based on the number of participant players input on the meeting setting screen.

In this embodiment, an initial node ID is defined for each participant ID. That is, in the tournament table contained in the meeting data produced by the meeting management data production unit 42, each participant ID is shown corresponding to an initial node ID.

The meeting data produced as described above is stored as a part of the meeting management data in the meeting management memory card 28a.

Fig. 5 is a diagram showing one example of a participant registration screen. This screen is used by a player wishing to participate in a meeting to input their name or to select a team to use in the match game. As shown in Fig. 5, the participant registration screen image includes a player name display column, a using team name display column, and a registration button, all shown associated with a participant ID used in the meeting. It should be noted that the example shown in Fig. 5 is related to the case in which a player 1 is registered as a participant having a participant ID "P1".

In this embodiment, a single participant memory card 28b is allocated for each player participating in the meeting. In other words, a single participant memory card 28b is allocated to every participant ID. A player wishing to participate in the meeting stores data in advance in their own participant memory card 28b, the data including attribute data describing the player name or the like and team data on a team the player is going to use in a match against other players. Here, note that the team data contains, for example, data for displaying a flag and/or uniform of that team on a game screen, parameter data describing the ability of the soccer players belonging to that team, and so forth.

A player wishing to participate in the meeting inserts their participant memory card 28b having the above-described data stored therein into a memory card slot (a memory card slot with no meeting management memory card 28a held therein) of the game machine 10a, and thereafter presses the registration button associated with a desired participant ID. For example, a player wishing to be registered as a participant having a participant ID "P2" will press the registration button associated with the participant ID "P2".

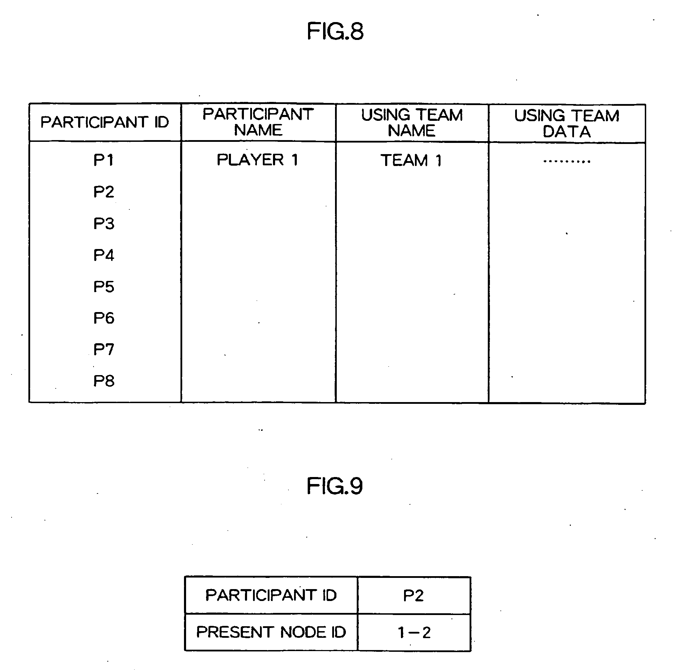

With the registration button pressed, the attribute data and the team data is read from the participant memory card 28b, and the content thereof is registered in the participant management table such as is shown in Fig. 8. The participant player table such as is shown in Fig. 8 is formed containing a participant ID column, a participant name column, a using team name column, and a using team data column.

On the participant registration screen, when the registration button associated with, for example, the participant ID "P2" is pressed, the content of the data read from the participant memory card 28b is registered in the participant name column, the using team name column, and the using team data column, all associated with the participant ID "P2".

It should be noted here that the team data stored in the participant memory card 28b may be stored intact in the using team data column. Alternatively, while the team data is stored in a predetermined storage area in the meeting management memory card 28a, data indicative of the storage area may be stored in the using team data column.

The participant management table may be produced at the time when the decision button is pressed on the meeting setting screen, so as to allow registration therein of the number of participant data items, the number being the number set on the meeting setting screen as the number of participating players. Alternatively, the participant management table may be produced at the time when the initial participant registration takes place on the participant registration screen. The participant management table is also stored as a part of the meeting management data in the meeting management memory card 28a.

In this embodiment, with the registration button pressed on the participant registration screen, the above-described writing operation relative to the meeting management memory card 28a is carried out, and the meeting data stored in the meeting management memory card 28a is written into the participant memory card 28b.

The participant data such as is shown in Fig. 9, for example, is also written into the participant memory card 28b. The participant data shown in Fig. 9 is formed containing a participant ID column and a present node ID column.

In the participant ID column, the participant ID corresponding to the player is stored. That is, the participant ID associated with the registration button pressed by the player on the participant registration screen is stored.

In the present node ID column, the node ID corresponding to the player is stored. When the participant data is written into the participant memory card 28b, the node ID which is shown corresponding to the participant ID of the player in the tournament table stored in the meeting management memory card 28a is stored as an initial value in the present node ID column. The content of the present node ID column is updated based on the result of a match game, to be described later.

It should be noted that as the participant ID and the tournament table are stored in the participant memory card 28b, specification of the node ID corresponding to that player is possible. Therefore, it is not always necessary to store the present node ID as a part of the participant data, though it is determined here, for brevity of the description, that the present node ID column is provided in the participant data.

As described above, when the registration of all participants is completed on the participant registration screen, meeting management data which contains the meeting data, the attribute data on all players participating in the meeting, and the team data of all players participating in the meeting is resultantly stored in the meeting management memory card 28a. Meanwhile, the meeting data, the attribute data on the player, the team data of the player, and the participant data of the player are resultantly stored in the participant memory card 28b of each player.

In the following, the functional blocks of the match playing game machine 10b will be described.

In the game system 40, a match is carried out between the participants of the meeting using the match playing game machine 10b. Each of the match playing game machines 10b has a structure enabling the match.

A player who is going to play a match using the match playing game machine 10b selects a match playing menu on a game menu screen. It should be noted that the match playing game machine 10b comprises a first controller 32 and a second controller 32. One player plays the game using the first controller 32, while the other player plays the game using the second controller 32.

With the match playing menu selected, the game result data reading unit 46 shows both of the matching players a screen for encouraging insertion of the respective participant memory cards 28b into the respective memory card slots. When the match playing game machine 10b in use has a plurality of memory card slots, guidance is shown on the screen for encouraging one player to insert their participant memory card 28b into a first memory card slot and the other player to insert their participant memory card 28b into a second memory card slot. Meanwhile, when the match playing game machine 10b in use has only a single memory card slot, guidance may be shown for encouraging one of the players to insert their participant memory card 28b into the memory card slot, and, after predetermined data is read from the participant memory card 28b, encourage the other player to insert their participant memory card 28b into the memory card slot.

The game result data reading unit 46 determines whether or not a participant memory card 28b is already held in the memory card slot. When it is determined that the participant memory cards 28b of both players are already held, the participant data is read from the respective participant memory cards 28. In particular, the game result data reading unit 46 reads the present node ID's (game result data) from the respective participant memory cards 28b.

The judging unit 48 determines whether or not the combination of the present node ID's of the two players, read by the game result data reading unit 46, is a predetermined combination. That is, the judging unit 48 determines whether or not the match by these players is legitimate as being in conformity with the tournament tree.

As a tournament table which shows the pairings for all matches according to the tournament tree in the form of combinations of the node ID's is stored in the participant memory card 28b, as described above, the judging unit 48 determines, with reference to the tournament table stored in the participant memory card 28b, whether or not the combination of the present node ID's, read by the game result data reading unit 46, is coincident with any of the match pairings defined in the tournament table.

More specifically, the judging unit 48 obtains, based on the present node ID and the tournament table read from one of the participant memory cards 28b, a match node ID which is defined corresponding to that present node ID according to the tournament table. Thereafter, the judging unit 48 determines whether or not the obtained match node ID coincides with the present node ID read from the other participant memory card 28b. When it is determined that these coincide with each other, it is determined that the combination of the present node ID's read by the game result data reading unit 46 is legitimate.

As described above, the judging unit 48 determines whether or not the node ID condition specified based on the single present node ID read by the game result data reading unit 46 and the tournament table is satisfied by another present node ID read by the game result data reading unit 46, to thereby determine whether or not the combination of the present node ID's read by the game result data reading unit 46 is a predetermined combination in conformity with the tournament tree.

According to the determination result obtained by the judging unit 48, the game implementation control unit 50 causes both players to initiate the match game. For example, when it is determined that the combination of the present node ID's read by the game result data reading unit 46 is not the combination in conformity with the tournament tree, the game implementation control unit 50 prohibits implementation of the match game by the players.

Meanwhile, when it is determined that the combination of the present node ID's read by the game result data reading unit 46 is a combination in conformity with the tournament tree, the game implementation control unit 50 reads the attribute data, the team data, and so forth, from the respective participant memory cards 28b, and performs control so as to implement the match game based on the data read.

It should be noted that the game implementation control unit 50 may show a match game screen based on the present node ID's of the matching players. For example, a screen image which is produced based on the present node ID's of the matching players may be displayed as a start screen and/or a result presentation screen of the match game.

For at least one of the participant memory cards 28b of both players, the game result data update unit 52 updates the present node ID stored in the participant memory card 28b, based on the result of the match game having been implemented under control by the game implementation control unit 50. For example, the game result data update unit 52 determines a new present node ID based on the present node ID and the content of the tournament table, and stores the determined present node ID in the participant memory card 28b.

In this embodiment, the game result data update unit 52 effects the update with respect to the participant memory card 28b of the winning player of the match game. More specifically, the game result data update unit 52 reads the present node ID and the tournament table from the participant memory card 28b of the winning player, and obtains the next node ID set corresponding to that present mode ID according to the tournament table. Then, the present node ID column of the participant data stored in the participant memory card 28b of the winning player is updated so as to show the node ID currently stored as the next node ID. In this case, the game result data update unit 52 also updates the tournament table stored in the participant memory card 28b such that the participant ID is made to correspond to the node ID newly stored as the present node ID.

Meanwhile, for the participant memory card 28b of the losing player of the match game, the game result data update unit 52 maintains the present node ID column in the participant data as is, that is, without updating. Alternatively, for the participant memory card 28b of the losing player of the match game, the game result data update unit 52 may update the present node ID to be a predetermined string indicative of a lost game.

It should be noted that the game result data update unit 52 may store the match record data concerning that match in the game participant memory cards 28b. Here, the match record data includes data indicative of the state of occurrence of various events during the match (a score event, a soccer player exchange event, and so forth), data on evaluation of the respective soccer players playing in the match (an evaluation point, a successful pass rate, and so forth), and so forth. The match record data may be stored in the participant memory cards 28b of both players.

Also, the game result data update unit 52 may update the team data stored in the participant memory cards 28b of both players based on the progress and/or result of the match. For example, a parameter indicative of the degree of tiredness of each soccer player may be updated. In addition, for example, a parameter indicative of the state of injury of each soccer player and/or a parameter concerning a yellow or red card may be updated.

As described above, the present node ID stored in the participant memory card 28b of the winning player is updated to be the node ID currently registered as the next node ID corresponding to that present node ID. As determination as to whether or not to carry out a match game is made based on the combination of the present node ID's stored in the participant memory cards 28b of the matching players, the winning player is entitled, as long as the opponent player of the next match is already determined, to carry out the next match against that opponent player at any time and using any match playing game machine 10b.

It should be noted that the game system 40 can reflect the result of each match in the content stored in the meeting management memory card 28a. In the following, this structure will be described.

When the content stored in the meeting management memory card 28a is updated based on the result of a match game, the host of the meeting or the player inserts his/her participant memory card 28b into the memory card slot of the meeting management game machine 10a (a memory card slot with no meeting management memory card 28a held therein) . Then, the host of the meeting or the player selects a match result registration menu on the game menu screen shown in the meeting management game machine 10a.

With the match result registration menu selected, the meeting management data update unit 44 determines whether or not a meeting management memory card 28a and a participant memory card 28b are already held in the memory card slots. When it is determined that such cards are held in the slots, the meeting management data update unit 44 reads the participant data (the participant ID and the present node ID) from the participant memory card 28b, and updates the content of the tournament table stored in the meeting management memory card 28a such that that participant ID is made to correspond to that present node ID according to the tournament table.

Further, the meeting management data update unit 44 reads the match record data from the participant memory card 28b and stores in the meeting management memory card 28a. Still further, the meeting management data update unit 44 also reads the team data from the participant memory card 28b and updates the team data of that player stored in the meeting management memory card 28a.

As described above, the game system 40 can store the result of a match game carried out using each of the match playing game machines 10b via the participant memory card 28b in the meeting management memory card 28a. This arrangement can leave the player free from the burden of oral reporting, or reporting in a predetermined written format, on the detailed information on the match game result. That is, the game system 40 can reduce the burden imposed on the player in connection with reporting of the match game result. Simultaneously, the burden imposed on the host of the meeting in connection with collection of the match game results can be reduced. Further, failure of reporting the information on the match game result can be prevented, and unfairness such as the player having participated in the game not reporting information being disadvantageous to the player themselves can be prevented.

It should be noted that the meeting management game machine 10a can refer to the various data stored in the meeting management memory card 28a. That is, in the meeting management game machine 10a, the host of the meeting and the player can refer to the result of a match carried out by other players, the progress of the meeting, the latest states of the respective teams, the record of each soccer player (a playing time, a successful pass rate, and so forth), various aggregated data (score ranking, and so forth), and so forth.

As described above, the game system 40 (the meeting management game machine 10a and the match playing game machine 10b) allows, in a game tournament, each player to play a match against an opponent player at any time and using any match playing game machine 10b, while ensuring that the match is carried out by the pair defined according to the tournament tree. That is, the game system 40 can preferably realize a tournament meeting in which players play a match according to a tournament tree. Also, the game system 40 enables collective management of the results of the matches carried out using the match playing game machines 10b, while suppressing increase of the burden imposed on the host of the meeting.

It should be noted that the present invention is not limited to the above-described embodiment.

For example, although it is described in the above that a tournament table in accordance with the number of participant players input on the meeting setting screen is stored in the meeting management memory card 28a and the participant memory card 28b, in the case where a plurality kinds of tournament table corresponding to the number of participant players which can be input on the meeting setting screen (the example shown in Fig. 7 excluding the participant ID column) are stored in advance in the DVD-ROM 25, the identification information of the tournament table selected according to the number of participant players input on the meeting setting screen may be stored as a part of the meeting data in the meeting management memory card 28a and each participant memory card 28b. In the case where a tournament table is uniquely determined based on the number of participant players input on the meeting setting screen, the number of participant players may be used as the identification information of the tournament table.

In the above, a table showing a participant ID and a present node ID defined corresponding to each other may be stored in the meeting management memory card 28a. Also, when the judging unit 48 determines whether or not the combination of the present node ID's read from the participant memory cards 28b is legitimate, the identification information of the tournament table used for that meeting may be read from either one of the participant memory cards 28b. Then, the tournament table identified by that identification information is read from the DVD-ROM 25, and the above-described determination is made based on the read tournament table.

Also, for example, it is described in the above that the attribute data and/or team data of a player wishing to participate in the meeting is read from the participant memory card 28b with the participant registration screen shown, whereby participant registration is completed. Alternatively, it may be arranged such that while the participant registration screen is shown, the player wishing to participate in the meeting is asked to input their player name (a participant's name) or to select data on the team which the player is going to use in the match from the team data stored in advance in the DVD-ROM 25. Then, the attribute data and the team data of the player are produced based on the input or the content of the selection made on this screen, and stored in the meeting management memory card 28a and the participant memory card 28b of the player.

Also, for example, it may be arranged such that the host of the meeting is entitled to change the tournament tree after registration of all participants is completed. When such a change is made, the meeting management data production unit 42 may update the tournament table stored in the meeting management memory card 28a. In this case, all participants may be asked to sequentially mount their participant memory cards 28b in the game machine 10a so that the tournament tables stored therein are updated. In this case, it may be arranged such that the attribute data and team data of other players may be stored in the respective participant memory cards 28b.

Also, for example, although it is described in the above that the game machine 10 is constructed mainly from the consumer game machine 11, the game machine 10 may alternatively be constructed from other computers, such as a commercial game machine, a portable game machine, a portable phone, a personal data assistant, a personal computer, and so forth.

Also, for example, the game to be carried out using the match playing game machine 10b is not limited to a match game for a one-vs-one match game to be played by two players. Alternatively, a match game to be played by groups of players, each group comprising one or more players, may be similarly employed. For example, a soccer game in which two operation object teams relevant to a match are operated by player groups may be applicable. Still alternatively, a match game (that is, a battle royal game) in which three or more players battle at the same time may be employed.

It should be noted that the game to be carried out using the match playing game machine 10b is not limited to a match game, and any game involving two or more players or groups of players can be employed.

Also, for example, although a case in which the present invention is applied to a tournament meeting is described in the above, the present invention may be similarly applicable to a league meeting in which a participant battles against all other participants to compete in the points according to the number of wins and draws. Alternatively, the present invention can be applied to a meeting held in any other style.

Also, for example, although it is arranged in the above that a program is supplied from the DVD-ROM 25 serving as an information storage medium to the consumer game machine 11, the program may alternatively be supplied via a communication network to a consumer game machine 11, or the like.

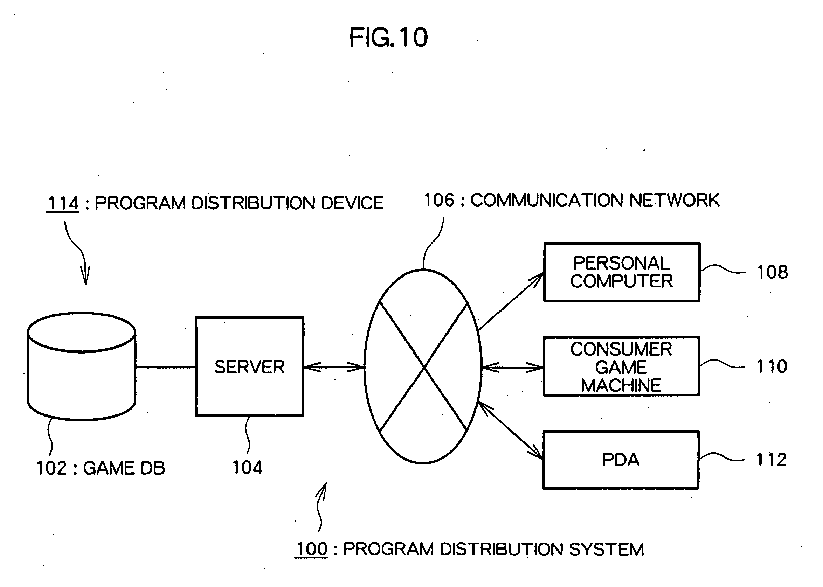

Fig. 10 is a diagram showing the entire structure of a program distribution system using a communication network. With reference to Fig. 10, a program distribution method according to the present invention will be described.

As shown in Fig. 10, the program distribution system 100 comprises a game database 102, a server 104, a communication network 106, a personal computer 108, a consumer game machine 110, and a PDA (personal data assistant) 112. The game database 102 and the server 104 together constitute a program distribution device 114. The communication network 106 is constructed comprising, for example, the Internet or a cable television network. In this system, a program similar to the content stored in the DVD-ROM 25 is stored in the game database (an information storage medium) 102. Then, when a demander makes a request for game distribution, using the personal computer 108, the consumer game machine 110, the PDA 112, or the like, the request is supplied via the communication network 106 to the server 104. The server 104, in response to the game distribution request, reads the program from the game database 102 and sends to the entity, such as the personal computer 108, the consumer game machine 110, the PDA 112, or the like, having made the game distribution request.

It should be noted that it is arranged here that a game is distributed in response to a game distribution request, alternatively, unidirectional transmission from the server 104 may be defined. Also, it is not always necessary to send the entire program necessary to realize a game at once (collective distribution), and only a necessary part of the program according to the aspect of the game may be sent (dividing distribution) . Game distribution via the communication network 106 as described above allows the program demander to readily obtain the program.

## Claims

1. A game machine (10b) for implementing a game involving a plurality of players or groups of players, comprising:
game result data reading means (46) for reading game result data stored in each of information storage media respectively corresponding to the plurality of players or groups of players;
judgment means (48) for determining whether or not a combination of the game result data read by the game result data reading means (46) is a predetermined combination;
game implementation control means (50) for implementing the game according to a result of the determination made by the judgment means (48); and
game result data update means (52) for updating, for at least one of the information storage media respectively corresponding to the plurality of players or groups of players, the game result data stored in the information storage medium, based on a result of the game.

2. The game machine (10b) according to claim 1, further comprising:
combination data storage means (28b) for storing combination data indicative of a plurality of combinations of the game result data,
wherein
the judgment means (48) determines whether or not the combination of the game result data read by the game result data reading means (46) coincides with any of the plurality of combinations indicated by the combination data.

3. The game machine (10b) according to any of claims 1 and 2,
wherein
the game is a match game to be played by the plurality of players or groups of players, and
the game result data update means (52) updates the game result data stored in the information storage medium corresponding to a winning player or a winning group of players of the match game.

4. The game machine (10b) according to claim 1, wherein
said game result data reading means (46) is adapted to read, when some of a plurality of portable information storage media (28b) respectively corresponding to the plurality of players or groups of players are mounted in the game machine (10b), node ID information respectively recorded in the portable information storage media (28b) mounted in the game machine (10b), said node ID information identifying a node in a tournament table;
said game machine (10b) further comprises a combination data reading means (48) adapted to read, when some of the portable information storage media (28b) respectively corresponding to the plurality of players or group of players are mounted in the game machine (10b), combination data stored in any of the portable information storage media (28b) mounted in the game machine (10b), said combination data being indicative of a plurality of combinations of node ID information according to the tournament table;
said judgment means (48) is adapted to determine whether or not the combination of the node ID information read by the game result data reading means (46) coincides with any of the plurality of combinations described by the combination data read by the combination data reading means (48); and
said game result data update means (52) is adapted to update the node ID information stored in the portable information storage medium (28b) corresponding to a winner player or group of players of a match game among the portable information storage media (28b) mounted in the game machine (10b), based on a result of the match game.

5. A game system (40) including a plurality of game machines (10b), for taking placing a tournament of a match game involving a plurality of players or groups of players, the game system (40) comprising:
a game machine (10b) according to claim 4,
means for storing said combination data in said portable information storage media (28B) respectively corresponding to the players or groups of players, and
means for storing the node ID information of a node of the nodes shown in the tournament table, to which a player or a group of players of the plurality of players or groups of players is initially set, in the portable information storage medium (28b) corresponding to that player or group of player.

6. A control method for controlling a game machine (10b) for implementing a game involving a plurality of players or groups of players, comprising:
a game result data reading step of reading game result data stored in each of information storage media respectively corresponding to the plurality of players or groups of players;
a judgment step of determining whether or note a combination of the game result data read at the game result data reading step is a predetermined combination;
a game implementation control step of implementing the game according to a result of the determination made at the judgment step; and
a game result data update step of updating, for at least one of the information storage media respectively corresponding to the plurality of players or groups of players, the game result data stored in the information storage medium, based on a result of the game.

7. The control method according to claim 6, wherein
said game result data reading step comprises reading, when some of a plurality of portable information storage media (28b) respectively corresponding to the plurality of players or groups of players are mounted in the game machine (10b), node ID information respectively recorded in the portable information storage media (28b) mounted in the game machine (10b), said node ID information identifying a node in a tournament table;
said control method further comprises a combination data reading step of reading, when some of the portable information storage media (28b) respectively corresponding to the plurality of players or group of players are mounted in the game machine (10b), combination data stored in any of the portable information storage media (28b) mounted in the game machine (10b), said combination data being indicative of a plurality of combinations of node ID information according to the tournament table;
said judgment step determines whether or not the combination of the node ID information read at the game result data reading step coincides with any of the plurality of combinations described by the combination data read at the combination data reading step; and
said game result data update step updates the node ID information stored in the portable information storage medium (28b) corresponding to a winner player or group of players of a match game among the portable information storage media (28b) mounted in the game machine, based on a result of the match game.

8. A control method for controlling a game system (40) including a first game machine (10a) and a plurality of second game machines (10b), for taking placing a tournament of a match game involving a plurality of players or groups of players, the method comprising
a control method according to claim 7, which is performed by a second game machine (10b);
a step of storing, by the first game machine (10a), said combination data in said portable information storage media (28B) respectively corresponding to the players or groups of players, and
a step of storing, by the first game machine (10a), the node ID information of a node of the nodes shown in the tournament table, to which a player or a group of players of the plurality of players or groups of players is initially set, in the portable information storage medium (28b) corresponding to that player or group of player.

9. A program for causing a computer to function as a game machine (10b) for implementing a game involving a plurality of players or groups of players, comprising:
game result data reading means (46) for reading game result data stored in each of information storage media respectively corresponding to the plurality of players or groups of players;
judgment means (48) for determining whether or not a combination of the game result data read by the game result data reading means (46) is a predetermined combination;
game implementation control means (50) for implementing the game according to a result of the determination made by the judgment means (48); and
game result data update means (52) for updating, for at least one of the information storage media respectively corresponding to the plurality of players or groups of players, the game result data stored in the information storage medium, based on a result of the game.

10. An information storage medium recording a program according to claim 9.

## Patentansprüche

1. Spielmaschine (10b) zum Durchführen eines Spiels, das mehrere Spieler oder Gruppen von Spielern involviert, die aufweist:
eine Spielergebnisdatenleseeinrichtung (46) zum Lesen von Spielergebnisdaten, die in einem jeweiligen den Spielern oder Gruppen von Spielern entsprechenden Informationsspeichermedium gespeichert sind;
eine Feststellungseinrichtung (48) zum Bestimmen, ob eine Kombination der Spielergebnisdaten, die von der Spielergebnisdatenleseeinrichtung (46) gelesen werden, eine vorbestimmte Kombination ist;
eine Spieldurchführungssteuereinrichtung (50) zum Durchführen des Spiels entsprechend einem Ergebnis der Bestimmung, die von der Feststellungseinrichtung (48) durchgeführt wird; und
eine Spielergebnisdatenerneuerungseinrichtung (52) zum Erneuern für zumindest eines der Informationsspeichermedien, die jeweils den Spielern oder Gruppen von Spielern entsprechen, der Spielergebnisdaten, die in dem Informationsspeichermedium gespeichert sind, auf der Grundlage eines Ergebnisses des Spiels.

2. Spielmaschine (10b) nach Anspruch 1, die außerdem aufweist:
eine Kombinationsdatenspeichereinrichtung (28b) zum Speichern von Kombinationsdaten, die mehrere Kombinationen der Spielergebnisdaten angeben,
wobei
die Feststellungseinrichtung (48) bestimmt, ob die Kombination der Spielergebnisdaten, die von der Spielergebnisdatenleseeinrichtung (46) gelesen werden, mit irgendeiner der Kombinationen, die durch die Kombinationsdaten angegeben werden, übereinstimmt.

3. Spielmaschine (10b) nach einem der Ansprüche 1 und 2,
wobei
das Spiel ein Wettkampfspiel ist, das von den Spielern oder Gruppen von Spielern zu spielen ist, und
die Spielergebnisdatenerneuerungseinrichtung (52) die Spielergebnisdaten, die in dem Informationsspeichermedium gespeichert sind, entsprechend einem gewinnenden Spieler oder einer gewinnenden Gruppe von Spielern des Wettkampfspiels erneuert.

4. Spielmaschine (10b) nach Anspruch 1, wobei
die Spielergebnisdatenleseeinrichtung (46) ausgelegt ist, wenn einige von mehreren tragbaren Informationsspeichermedien (28b), die jeweils den Spielern oder Gruppen von Spielern entsprechen, in die Spielmaschine (10b) eingebracht sind, Knoten-ID-Informationen, die jeweils in den tragbaren Informationsspeichermedien (28b), die in die Spielmaschine (10b) eingebracht sind, aufgezeichnet sind, zu lesen,
wobei die Knoten-ID-Informationen einen Knoten in einer Wettkampftabelle identifizieren;
die Spielmaschine (10b) außerdem eine Kombinationsdatenleseeinrichtung (48) aufweist, die ausgelegt ist, wenn einige der tragbaren Informationsspeichermedien (28b), die jeweils den Spielern oder Gruppen von Spielern entsprechen, in die Spielmaschine (10b) eingebracht sind, Kombinationsdaten, die in irgendeinem der tragbaren Informationsspeichermedien (28b), die in die Spielmaschine (10b) eingebracht sind, gespeichert sind, zu lesen, wobei die Kombinationsdaten mehrere Kombinationen von Knoten-ID-Informationen entsprechend der Wettkampftabelle angeben;
die Feststellungseinrichtung (48) ausgelegt ist zu bestimmen, ob die Kombination der Knoten-ID-Informationen, die von der Spielergebnisdatenleseeinrichtung (46) gelesen werden, mit irgendeiner der Kombinationen, die durch die Kombinationsdaten, die von der Kombinationsdatenleseeinrichtung (48) beschrieben werden, übereinstimmt; und
die Spielergebnisdatenerneuerungseinrichtung (52) ausgelegt ist, die Knoten-ID-Informationen, die in dem tragbaren Informationsspeichermedium (28b), das einem gewinnenden Spieler oder einer gewinnenden Gruppe von Spielern eines Wettkampfspiels entspricht, unter den tragbaren Informationsspeichermedien (28b), die in die Spielmaschine (10b) eingebracht sind, auf der Grundlage eines Ergebnisses des Wettkampfspiels zu erneuern.

5. Spielsystem (40), das mehrere Spielmaschinen (10b) enthält, um einen Wettkampfs eines Wettkampfspiels, das mehrere Spieler oder Gruppen von Spielern involviert, durchzuführen, wobei das Spielsystem (40) aufweist:
eine Spielmaschine (10b) nach Anspruch 4,
eine Einrichtung zum Speichern der Kombinationsdaten in den tragbaren Informationsspeichermedien (28b), die jeweils den Spielern oder Gruppen von Spielern entsprechen, und
eine Einrichtung zum Speichern der Knoten-ID-Informationen eines Knotens der Knoten, die in der Wettkampftabelle gezeigt sind, auf den ein Spieler oder eine Gruppe von Spielern der Spieler oder Gruppe von Spielern anfänglich gesetzt ist, in dem tragbaren Informationsspeichermedium (28b), das dem Spieler oder der Gruppe von Spielern entspricht.

6. Steuerverfahren zum Steuern einer Spielmaschine (10b) zum durchführen eines Spiels, das mehrere Spieler oder Gruppen von Spielern involviert, das aufweist:
einen Spielergebnisdatenleseschritt zum Lesen von Spielergebnisdaten, die in einem jeweiligen aus mehreren Informationsspeichermedien, die jeweils den Spielern oder Gruppen von Spielern entsprechen, gespeichert sind;
einen Feststellungsschritt zum Bestimmen, ob eine Kombination der Spielergebnisdaten, die in dem Spielergebnisdatenleseschritt gelesen werden, eine vorbestimmte Kombination ist;
einen Spieldurchführungssteuerungsschritt zum Durchführen des Spiels entsprechend einem Ergebnis der Bestimmung, die in dem Feststellungsschritt durchgeführt wird; und
einen Spielergebnisdatenerneuerungsschritt zum Erneuern für mindestens eines der Informationsspeichermedien, die jeweils den Spielern oder Gruppe von Spielern entsprechen, der Spielergebnisdaten, die in dem Informationsspeichermedium gespeichert sind, auf der Grundlage eines Ergebnisses des Spiels.

7. Steuerverfahren nach Anspruch 6, wobei
der Spielergebnisdatenleseschritt aufweist: wenn einige von mehreren tragbaren Informationsspeichermedien (28b), die jeweils den Spielern oder Gruppen von Spielern entsprechen, in die Spielmaschine (10b) eingebracht sind, Lesen von Knoten-ID-Informationen, die jeweils in den tragbaren Informationsspeichermedien (28b), die in die Spielmaschine (10b) eingebracht sind, aufgezeichnet sind, wobei die Knoten-ID-Informationen einen Knoten in einer Wettkampftabelle identifizieren;
das Steuerverfahren außerdem aufweist: einen Kombinationsdatenleseschritt zum, wenn einige der tragbaren Informationsspeichermedien (28b), die jeweils den Spielern oder Gruppen von Spielern entsprechen, in die Spielmaschine (10b) eingebracht sind, Lesen von Kombinationsdaten, die in irgendeinem der tragbaren Informationsspeichermedien (28b), die in die Spielmaschine (10b) eingebracht sind, gespeichert sind, wobei die Kombinationsdaten mehrere Kombinationen von Knoten-ID-Informationen entsprechend der Wettkampftabelle angeben;
der Feststellungsschritt bestimmt, ob die Kombination der Knoten-ID-Informationen, die in dem Spielergebnisdatenlesenschritt gelesen werden, mit irgendeiner der Kombinationen, die durch die Kombinationsdaten, die in dem Kombinationsdatenlesenschritt gelesen werden, beschrieben werden, übereinstimmt; und
der Spielergebnisdatenerneuerungsschritt die Knoten-ID-Informationen, die in dem tragbaren Informationsspeichermedium (28b) gespeichert sind, das einem gewinnenden Spieler oder einer gewinnenden Gruppe von Spielern eines Wettkampfspiels entspricht, unter den tragbaren Informationsspeichermedien (28b), die in die Spielmaschine eingebracht sind, auf der Grundlage eines Ergebnisses des Wettkampfspiels erneuert.

8. Steuerverfahren zum Steuern eines Spielsystems (40), das eine erste Spielmaschine (10a) und mehrere zweite Spielmaschinen (10b) enthält, zum Durchführen eines Wettkampfes eines Wettkampfspiels, das mehrere Spieler oder Gruppen von Spielern involviert, wobei das Verfahren aufweist:
ein Steuerverfahren nach Anspruch 7, das von einer zweiten Spielmaschine (10b) durchgeführt wird;
einen Schritt zum Speichern der Kombinationsdaten in den tragbaren Informationsspeichermedien (28b), die jeweils den Spielern oder Gruppen von Spielern entsprechen, durch die erste Spielmaschine (10a), und
einen Schritt zum Speichern der Knoten-ID-Informationen eines Knotens aus den Knoten, die in der Wettkampftabelle gezeigt sind, auf den ein Spieler oder eine Gruppe von Spielern aus den Spielern oder der Gruppe von Spielern anfänglich gesetzt ist, in dem tragbaren Informationsspeichermedium (28b), das dem Spieler oder der Gruppe von Spielern entspricht, durch die erste Spielmaschine (10a).

9. Programm zum Bewirken, dass ein Computer als eine Spielmaschine (10b) dient, um ein Spiel, das mehrere Spieler oder Gruppen von Spielern involviert, durchzuführen, das aufweist:
eine Spielergebnisdatenleseeinrichtung (46) zum Lesen von Spielergebnisdaten, die in jedem von mehreren Informationsspeichermedien, die jeweils den Spielern oder Gruppen von Spielern entsprechen, gespeichert sind;
eine Feststellungseinrichtung (48) zum Bestimmen, ob eine Kombination der Spielergebnisdaten, die von der Spielergebnisdatenleseeinrichtung (46) gelesen werden, eine vorbestimmte Kombination ist;
eine Spieldurchführungssteuerungseinrichtung (50) zum Durchführen des Spiels entsprechend einem Ergebnis der Bestimmung, die von der Feststellungseinrichtung (48) durchgeführt wird; und
eine Spielergebnisdatenerneuerungseinrichtung (52) zum Erneuern für mindestens eines der Informationsspeichermedien, die jeweils den Spielern oder Gruppen von Spielern entsprechen, der Spielergebnisdaten, die in dem Informationsspeichermedium gespeichert sind, auf der Grundlage eines Ergebnisses des Spiels.

10. Informationsspeichermedium, auf dem ein Programm nach Anspruch 9 aufgezeichnet ist.

## Revendications

1. Machine de jeu (10b) pour la mise en oeuvre d'un jeu impliquant une pluralité de joueurs ou de groupes de joueurs, comprenant :
un moyen de lecture des données de résultat du jeu (46) pour lire les données de résultat du jeu stockées dans chacun des supports de stockage d'informations correspondant, respectivement, à la pluralité de joueurs ou de groupes de joueurs ;
un moyen de jugement (48) pour déterminer si une combinaison des données de résultat du jeu lue par les moyens de lecture des données de résultat du jeu (46) est une combinaison prédéterminée ou non ;
un moyen de contrôle de mise en oeuvre du jeu (50) pour mettre en oeuvre le jeu selon un résultat de la détermination réalisée par le moyen de jugement (48) ; et
un moyen d'actualisation des données de résultat du jeu (52) pour actualiser, pour au moins l'un des supports de stockage d'informations correspondant, respectivement, à la pluralité de joueurs ou de groupes de joueurs, les données de résultat du jeu stockées dans le support de stockage d'informations, sur la base d'un résultat du jeu.

2. Machine de jeu (10b) selon la revendication 1, comprenant également :
un moyen de stockage de données de combinaison (28b) pour stocker des données de combinaison indicatives d'une pluralité de combinaisons des données de résultat du jeu,
dans laquelle
le moyen de jugement (48) détermine si la combinaison des données de résultat du jeu lue par le moyen de lecture des données de résultat du jeu (46) coïncide ou non avec l'une quelconque de la pluralité de combinaisons indiquées par les données de combinaison.

3. Machine de jeu (10b) selon l'une quelconque des revendications 1 et 2,
dans laquelle :
le jeu est un jeu de mémoire devant être joué par la pluralité de joueurs ou de groupes de joueurs, et
le moyen d'actualisation des données de résultat du jeu (52) actualise les données de résultat du jeu stockées dans le support de stockage d'informations correspondant à un joueur gagnant ou un groupe de joueurs gagnants du jeu de mémoire.

4. Machine de jeu (10b) selon la revendication 1,
dans laquelle :
ledit moyen de lecture des données de résultat du jeu (46) est adapté pour lire, quand une partie d'une pluralité de supports portatifs de stockage d'informations (28b) correspondant, respectivement, à la pluralité de joueurs ou de groupes de joueurs sont montés dans la machine de jeu (10b), les informations d'identification de noeud enregistrées, respectivement, dans les supports portatifs de stockage d'informations (28b) montés dans la machine de jeu (10b), lesdites informations d'identification de noeud identifiant un noeud dans un tableau de tournoi ;
ladite machine de jeu (10b) comprend également un moyen de lecture de données de combinaison (48) adapté pour lire, quand une partie des supports portatifs de stockage d'informations (28b) correspondant, respectivement, à la pluralité de joueurs ou de groupes de joueurs sont montés dans la machine de jeu (10b), les données de combinaison stockées dans l'un quelconque des supports portatifs de stockage d'informations (28b) montés dans la machine de jeu (10b), lesdites données de combinaison étant indicatives d'une pluralité de combinaisons d'informations d'identification de noeud selon le tableau de tournoi ;
ledit moyen de jugement (48) est adapté pour déterminer si la combinaison des informations d'identification de noeud lue par le moyen de lecture des données de résultat du jeu (46) coïncide ou non avec l'une quelconque de la pluralité de combinaisons décrites par les données de combinaison lues par le moyen de lecture de données de combinaison (48) ; et
ledit moyen d'actualisation de données de résultat du jeu (52) est adapté pour actualiser les informations d'identification de noeud stockées dans le support portatif de stockage d'informations (28b) correspondant à un joueur gagnant ou à un groupe de joueurs gagnants d'un jeu de mémoire parmi les supports portatifs de stockage d'informations (28b) montés dans la machine de jeu (10b), sur la base d'un résultat du jeu de mémoire.

5. Système de jeu (40) comprenant une pluralité de machines de jeu (10b) pour prendre part à un tournoi d'un jeu de mémoire impliquant une pluralité de joueurs ou de groupes de joueurs, le système de jeu (40) comprenant :
une machine de jeu (10b) selon la revendication 4,
un moyen pour stocker lesdites données de combinaison dans lesdits supports portatifs de stockage d'informations (28b) correspondant, respectivement, aux joueurs ou aux groupes de joueurs, et
un moyen pour stocker les informations d'identification de noeud d'un noeud parmi les noeuds illustrés dans le tableau de tournoi sur lequel un joueur ou un groupe de joueurs de la pluralité de joueurs ou de groupes de joueurs est initialement présent, dans le support portatif de stockage d'informations (28b) correspondant à ce joueur ou à ce groupe de joueurs.

6. Procédé de contrôle pour contrôler une machine de jeu (10b) pour mettre en oeuvre un jeu impliquant une pluralité de joueurs ou de groupes de joueurs, comprenant :
une étape de lecture des données de résultat du jeu pour lire les données de résultat du jeu stockées dans chacun des supports de stockage d'informations correspondant, respectivement, à la pluralité de joueurs ou de groupes de joueurs ;
une étape de jugement pour déterminer si une combinaison des données de résultat du jeu lue lors de l'étape de lecture des données de résultat du jeu est une combinaison prédéterminée ou non ;
une étape de contrôle de mise en oeuvre du jeu pour mettre en oeuvre le jeu selon un résultat de la détermination réalisée à l'étape de jugement ; et
une étape d'actualisation des données de résultat du jeu pour actualiser, pour au moins l'un des supports de stockage d'informations correspondant, respectivement, à la pluralité de joueurs ou de groupes de joueur, les données de résultat du jeu stockées dans le support de stockage d'informations, sur la base d'un résultat du jeu.

7. Procédé de contrôle selon la revendication 6, dans lequel :
ladite étape de lecture de données de résultat du jeu comprend la lecture, quand une partie d'une pluralité de supports portatifs de stockage d'informations (28b) correspondant, respectivement, à la pluralité de joueurs ou de groupes de joueurs sont montés dans la machine de jeu (10b), des informations d'identification de noeud enregistrées, respectivement, dans les supports portatifs de stockage d'informations (28b) montés dans la machine de jeu (10b), lesdites informations d'identification de noeud identifiant un noeud dans un tableau de tournoi ;
ledit procédé de contrôle comprend également une étape de lecture de données de combinaison pour lire, quand une partie des supports portatifs de stockage d'informations (28b) correspondant, respectivement, à la pluralité de joueurs ou de groupes de joueurs sont montés dans la machine de jeu (10b), les données de combinaison stockées dans l'un quelconque des supports portatifs de stockage d'informations (28b) montés dans la machine de jeu (10b), lesdites données de combinaison étant indicatives d'une pluralité de combinaisons d'informations d'identification de noeud selon le tableau de tournoi ;
ladite étape de jugement détermine si la combinaison des informations d'identification de noeud lue lors de l'étape de lecture des données de résultat du jeu coïncide ou non avec l'une quelconque de la pluralité de combinaisons décrites par les données de combinaison lues lors de l'étape de lecture des données de combinaison ; et
ladite étape d'actualisation des données de résultat du jeu actualise les informations d'identification de noeud stockées dans le support portatif de stockage d'informations (28b) correspondant à un joueur gagnant ou à un groupe de joueurs gagnants d'un jeu de mémoire parmi les supports portatifs de stockage d'informations (28b) montés dans la machine de jeu, sur la base d'un résultat du jeu de mémoire.

8. Procédé de contrôle pour contrôler un système de jeu (40) comprenant une première machine de jeu (10a) et une pluralité de secondes machines de jeu (10b), pour prendre part à un tournoi d'un jeu de mémoire impliquant une pluralité de joueurs ou de groupes de joueurs, le procédé comprenant :
un procédé de contrôle selon la revendication 7, réalisé par une seconde machine de jeu (10b) ;
une étape de stockage, par la première machine de jeu (10a), desdites données de combinaison dans lesdits supports portatifs de stockage d'informations (28b) correspondant, respectivement, aux joueurs ou aux groupes de joueurs, et
une étape de stockage, par la première machine de jeu (10a), des informations d'identification de noeud d'un noeud parmi les noeuds illustrés dans le tableau de tournoi sur lequel un joueur ou un groupe de joueurs de la pluralité de joueurs ou de groupes de joueurs est initialement présent, dans le support portatif de stockage d'informations (28b) correspondant à ce joueur
ou à ce groupe de joueurs.

9. Programme destiné à faire fonctionner un ordinateur comme une machine de jeu (10b) pour mettre en oeuvre un jeu impliquant une pluralité de joueurs ou de groupes de joueurs, comprenant :
un moyen de lecture des données de résultat du jeu (46) pour lire les données de résultat du jeu stockées dans chacun des supports de stockage d'informations correspondant, respectivement, à la pluralité de joueurs ou de groupes de joueurs ;
un moyen de jugement (48) pour déterminer si une combinaison des données de résultat du jeu lue par les moyens de lecture des données de résultat du jeu (46) est une combinaison prédéterminée ou non ;
un moyen de contrôle de mise en oeuvre du jeu (50) pour mettre en oeuvre le jeu selon un résultat de la détermination réalisée par le moyen de jugement (48) ; et
un moyen d'actualisation des données de résultat du jeu (52) pour actualiser, pour au moins l'un des supports de stockage d'informations correspondant, respectivement, à la pluralité de joueurs ou de groupes de joueurs, les données de résultat du jeu stockées dans le support de stockage d'informations, sur la base d'un résultat du jeu.

10. Support de stockage d'informations enregistrant un programme selon la revendication 9.
